(19) Europäisches Patentamt
European Patent Office
Office européen des brevets

(11) Publication number: **0 010 363**
**B1**

(12) **EUROPEAN PATENT SPECIFICATION**

(45) Date of publication of patent specification: 18.01.84

(51) Int. Cl.³: H 01 G 4/22, H 01 G 13/02

(21) Application number: 79301966.2

(22) Date of filing: 21.09.79

(54) **Improved impregnation capacitor and electrode foil therefor.**

(30) Priority: 18.10.78 US 952384
19.10.78 US 952947
11.06.79 US 47425

(43) Date of publication of application:
30.04.80 Bulletin 80/9

(45) Publication of the grant of the patent:
18.01.84 Bulletin 84/3

(84) Designated Contracting States:
BE CH DE FR GB IT SE

(56) References cited:
DE - A - 2 548 339
FR - A - 2 275 860
FR - A - 2 395 576
GB - A - 1 250 450
US - A - 1 770 851
US - A - 3 831 234

(73) Proprietor: GENERAL ELECTRIC COMPANY
1 River Road
Schenectady New York 12305 (US)

(72) Inventor: Newcomb, George Raymond
8270 Grover Avenue
South Glens Falls, New York 12801 (US)
Inventor: Pastir, Robert Victor
43 Lincoln Avenue
Glens Falls, New York 12801 (US)
Inventor: Dinicola, Nicola Gustino
28 Feeder Dam Road
South Glens Falls, New York 12801 (US)
Inventor: Wright, William Jerry
298 Ridge Street
Glens Falls, New York 12801 (US)

(74) Representative: Allam, Peter Clerk et al,
LLOYD WISE, TREGEAR & CO. Norman House
105-109 Strand
London WC2R 0AE (GB)

EP 0 010 363 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

# Improved impregnation capacitor and electrode foil therefor

This invention relates to an improved capacitor wherein solid synthetic resin dielectric strips and foil electrode strips have roughened and patterned interface surfaces, respectively, to stabilize their spaced relationship and to facilitate penetration of dielectric fluid therebetween. The present invention also provides a novel aluminum foil electrode especially useful in such a capacitor.

Fluid impregnated capacitors made up of alternating electrode foil and synthetic resin film strips wound in a tight roll form have been difficult to impregnate with dielectric fluids because although a capacitor rolls is wound with a certain degree of looseness, defined as space factor, the fluid must not only penetrate into the roll from the ends thereof, but must also penetrate the interfaces between film strips which stick together, and between film and foil strips which also stick together. In order to overcome this well known and common problem, a number of solutions have been proposed which relate to complex impregnation cycles and roughening of the foil or film surfaces by various surface disfiguration methods, including mechanical and chemical processes such as foil embossing, abrading, and coating, and film etching.

By way of example of the prior art approaches to overcoming the problem of achieving satisfactory impregnation of such capacitors with dielectric fluid, mention may be made of U.S. Patent No. 3,831,234, according to which the metal foil electrodes which are wound alternately with resin film strips, particularly polypropylene strips, are provided over their surfaces with numbers of indentations, particularly of generally pyramidal form, a proportion of the indentations being perforated to ensure satisfactory impregnation. The reference states that, provided that the depth of the indentations is controlled, they do not take up extra space in the capacitor. Another approach to the problem of impregnating capacitors using polypropylene dielectric strips is taught in UK Patent No. 1,250,450 according to which it is the polypropylene, rather than the foil strips, which are embossed so as to have a roughened surface formed by projections.

The problems associated with these solutions have been numerous, ranging from poor overall fluid impregnation and electrical test results, undesirable increase of thickness of the capacitor roll without correlation to the required space factor of the capacitor, and poor economics because of the additional processing required. More importantly the reliability and repeatability of acceptable electrical tests for capacitors produced from the usual manufacturing processes have been deleteriously affected by these prior solutions.

We have now discovered, in accordance with the present invention, that the foregoing problems may be overcome or minimized by the winding together, in roll form, of a polypropylene strip having one of its surfaces of a roughened texture so as to provide a film space factor above about 3.0%, with a metal foil electrode strip having a full pattern of continuous uniform dimple-like structures coterminously on the surface thereof, these structures providing a foil thickness which, before the foil is wound in the roll, is from 2 to 10 times the original thickness of the foil. This combination, when used with ester or hydrocarbon dielectric fluid impregnants, facilitates fluid impregnation of the roll to provide an improved, more stable capacitor of uniform space factor in a capacitor wherein synthetic resin material is the sole dielectric between the metal foil electrodes.

The invention will be described in greater detail with reference to the accompanying drawings, in which:

Fig. 1 is an exaggerated illustration of a capacitor roll in partly unrolled form to show dielectric film and electrode foil relationships.

Fig. 2 is an illustration of an electrical capacitor assembly utilizing a single capacitor roll of Fig. 1.

Fig. 3 is an illustration of a high voltage power factor correction capacitor assembly utilizing a plurality of the capacitor rolls as shown in Fig. 1.

Fig. 4 is a plan view of a section of foil electrode showing a pattern layout of the electrode foil.

Fig. 5 is a cross sectional view, in line form, of the patterned electrode foil of Fig. 4.

Fig. 6 is an exaggerated illustration of the use of pattern electrode foil and Hazy film in smooth to rough relationship as the sole dielectric in a capacitor.

Fig. 7 is an illustration of a modification of the embodiment of Fig. 6 showing the use of two Hazy film strips in rough to rough surface relationship.

Fig. 8 is an illustration of a modification of the embodiment of Fig. 7 showing the use of two Hazy film strips in smooth to smooth or head to head relationship.

Fig. 9 is an illustration of a modification of Fig. 6 showing the use of three Hazy film strips in smooth to rough relationship.

Fig. 10 is an illustration of a folded foil modification of the embodiment of Fig. 6.

Fig. 11 is a schematic illustration of an electrode foil embossing roll apparatus mounted on a capacitor roll winding machine.

Fig. 12 is an illustration of a modification of the apparatus of Fig. 11.

Referring now to Fig. 1 there is illustrated a capacitor roll 10 in a partly unrolled form. Roll 10 includes a pair of spaced metal foil strip electrodes 11 and 12 and intermediate polypropylene film strips 13 and 15. Additional polypropylene film strips 15 and 16 complete the roll so that pairs of polypropylene film strips are found between metal foil electrode strips throughout the roll. Tap straps

17 and 18 are inserted into the roll 10 to lie adjacent the electrode strips to serve as electrical connections for the electrodes.

One or more capacitor rolls 10 are inserted into an appropriate casing, the casing is filled with a dielectric fluid and the fluid is caused to penetrate and permeate the roll to fill up the spaces between the windings of the roll as well as into the polypropylene material itself. One such capacitor 18 is shown in Fig. 2 wherein a single roll 10 is included in a can or casing 20 filled with dielectric fluid 21 (not shown). Can 20 includes a pair of electrical terminals 22 and 23 to which taps 17 and 18 are connected. Cover 24, which is sealed to can 20, includes a small aperture (not shown) which is used to introduce fluid into the can 20 and is thereafter solder sealed as depicted by the solder 25.

Another capacitor denoted a power capacitor 26 is illustrated in Fig. 3 which is a capacitor to which this invention is more particularly applicable. In Fig. 3 capacitor 26 includes a plurality of rolls 10 which may be arranged in an upper and lower row, as a two pack design, all of which are immersed in fluid 21. Casing 20 may exceed 65.0 cm in height, and the rolls 10 may be from about 25.4 cm (10 inches) to 30.5 cm (12 inches) in length. Rolls 10 also include taps 17 and 18 which are joined together electrically and to terminals 27 and 28. Where a single pack design is utilized, the rolls are referred to as wide rolls and may be about 60 cm or greater in length. Taps 17 and 18 may be eliminated by use of an exposed foil construction where each electrode foil projects from a respective end of the roll. The foil windings at each end are soldered together and then a connection is made to terminals 27 and 28.

Because of the tightness of the windings of rolls 10 and the fact that the metal foil strip electrodes constitute essentially an impermeable lateral barrier, the fluid must enter through the roll ends 29 and 30 (Fig. 1). At this point, because of the elevated temperatures used in vacuum drying of the rolls as well as in the impregnation process, the overlapping polypropylene film strip edges at the roll ends tend to seal together as well as seal to the electrode strips and swell tightly with adjacent strips when absorbing fluid, thus hindering the penetration of the fluid into the roll.

In the preferred embodiments of the present invention the combination of Hazy polypropylene film strips and specially patterned metal foil strips provides a controlled permeable spacer means and fluid penetration paths into the rolls 10 from the roll ends in a unique and economical manner. Hazy film is the subject of a UK Patent No. 1542671 assigned to the same assignee as the present invention.

As best described, Hazy film comprises polypropylene film obtained from a blown tube manufacturing process where temperatures and speeds are controlled in such a manner that a polypropylene stalk or tube emanating from an extruder has on its outer surface a continuous and coextensive uniform layer of predominantly type III crystal structures, often referred to as $\beta$ crystals. Subsequent insufflation of the stalk into a bubble form results in surface discontinuities or craters sometimes defined as surface fibrils extending completely over one surface of the film. These fibrils may extend as much as 2 to 3 $\mu$m from the base film thickness. As described, the Hazy film of this invention therefore has one surface quite roughened and the opposite surface may be denoted as smooth or shiny. Roughness may be measured by ASTM test D2457—70 or D10003 although a measurement which considers the open space in a rough surface (space factor) is preferred. This irregular surface texture on the capacitor film strips in rolls 10 provides a space factor in the form of fluid paths between a contiguous foil electrode and a dielectric strip, or between contiguous dielectric strips to facilitate the penetration of fluid. Modified forms of Hazy film may be obtained from other film processes including the draft and tentering process and film casting process. However, within the scope of this invention other surface roughened polypropylene films may be employed provided their surface roughness provides a film space factor above about 3.0%, although Hazy film is most preferred.

Hazy film has not only a high degree of surface irregularity, but also a highly desirable high space factor. Space factor is a term describing the measured excess space for example between a measured volume of Hazy film strips superimposed on each other as compared with the measured volume of the same strips without any surface roughness. In other words, the roughness desired is related to a maximum peak to valley measurement over fewer peaks and valleys (which would give a high space factor and high impregnability) as compared to a maximum number of peaks and valleys of lesser dimensions which would give a lower space factor. With known film process conditions surface roughness may be empirically correlated to space factor by measuring light transmission through the film, for example, as per ASTM D10003, and the measurement obtained is in terms of haze.

The use of specially patterned foil electrodes, together with Hazy film provides an improved impregnatable capacitor structure. While capacitor electrodes may be foils of various metals, aluminum foil is the principle electrode material presently employed. Ordinarily, these electrodes are about 5.0 to 6.1 $\mu$m (0.20 to 0.24 mils) thickness and are soft annealed aluminum. It has been known to roughen the surfaces of aluminum electrodes in capacitor rolls to facilitate impregnation of the roll by deformation, etching, abrading, etc. U.S. Patent 3,746,953 and U.S. Patent No. 3,831,234 are examples. Many such roughened electrode foils were found to have serious disadvantages in that the roughening processes formed irregular projections, sharp edges or caused some larger perforations of the foil leading to sharp edges, and sharp edges are areas of high voltage stress and corona discharge in a capacitor. Also these sharp edges cause cutting of the adjacent polypropylene film which weakens the dielectric strength of the film at that point. A further disadvantage is that when foils were believed

to require a high degree of roughness such as obtained from crimping and knurling processes, these roughened foils retained an excessive space factor in the roll.

In accordance with a specific aspect of this invention, it has been discovered that an improved, uniquely patterned foil minimizes the foregoing impregnation and space factor problems. This foil comprises a soft annealed aluminum foil strip having a plurality of individual curvilinear surfaced dimple like projections and depressions from the plane of the foil strip, said projections and depressions being coterminous with the length and breadth of the useful foil surface in an electrical capacitor, and being formed and spaced apart in a manner whereby there is a smooth essentially continuously curving foil surface leading from one depression to an adjacent projection so that a point on the base of one depression and a point on the adjacent base of a projection are essentially coincident.

Referring now to Fig. 4 there is illustrated a section of a foil strip electrode 11 showing an exaggerated embossed and raised pattern of dimple-like depressions 31 and projections 32 thereon. The raised dimple pattern is a pattern projecting equally and oppositely from both sides of the material and from the original thickness of the material so that the overall thickness is significantly greater than the original thickness. The dimple structure is more clearly illustrated in Fig. 5. Referring to Fig. 5 there is illustrated a cross-section, in line form, of the foil 11 of Fig. 4. In one form of this invention the dimples are identical to each other, have an ovate like cross section, and extend about 12.7 $\mu$m 0.00025 inches) from each side of the center line of the foil strip. Each dimple has a base diameter of less than about 0.254 mm (0.01 inch) and the dimple or base centers are spaced about 0.508 mm (0.02 inches) apart as illustrated in Fig. 4. Each dimple may be described in preferred form as having a circular base and progressively decreasing horizontal circular cross sections terminating in a rounded or ovate form. The surfaces defining the dimples are smooth flowing curvilinear and continuous surfaces from one dimple, as a projection, to the next dimple as a depression. The vertical cross section approximates an electrical sine wave form indicating that there are no sharp corners or interruptions in curvature from the surface of one dimple to another. Other forms of curvilinear bases and cross sections may be employed so long as no sharp corners or ridges are present. The circular form described is preferred. This preference is based, in part, on the concept that the deformation of a foil strip to provide so many dimples may encompass a process which, in effect, smooths, polishes and work-hardens the foil to precondition it for capacitor utilization. The foil, as described, is referred to as a full dimple pattern foil. By this full dimple pattern, the total capacitor surface of the foil is involved in the pattern and there are no intermediate significantly undeformed areas. The pattern is described for example as 100/100 or 120/120 indicating that there are 200 or 240 dimples, respectively, for each linear inch (2.54 cm) of electrode foil. In other words, the curvilinear surfaces are essentially continuous over the foil and not interrupted. In this connection the pattern may be extended to greater than 120/120, as conditions merit. It is preferred that each dimple, however, has the same general dimensions as an adjacent dimple so that a regular pattern is obtained with rows of dimples at right angles to each other.

The full dimple pattern structure of this invention provides a maximum space between adjacent strips of aluminum foil and film dielectric strips with a minimum overall increase in space factor. This feature is attained through the unique structure of the foil. As noted in Fig. 5 the dome structure of the dimples significantly increases the thickness of the aluminum foil typically from an original thickness of about 5.5 $\mu$m (0.22 mil) to approximately 25 $\mu$m (1 mil). This is about five times the original thickness, a total thickness which if incompressible or fixed could not be effectively utilized in this invention. It is also a condition not ordinarily attained by means of etching, knurling or abrading an aluminum foil strip. At the same time the mechanical arch structure of dimples provides increasing or controlled resistance to crushing and dimple erasure or leveling when winding the foil under roll tension into a capacitor roll. However it permits a substantial degree of desirable cushioning and leveling in the winding process so that in spite of its original thickness the final capacitor roll is within design tolerances. In the capacitors of this invention, the useful range of thickness is an increase from about 2 to 10 times preferably 2 to 5 times the original thickness, with the most preferred thickness being about 2—3 times the original thickness. The metal electrode of this invention becomes a variable or flexible thickness spacer in the capacitor roll winding process as well as in the final capacitor. This flexible or variable thickness is correlated to those imposed forces found in a capacitor manufacturing process so that a desired degree of thickness is retained in the final capacitor. When in the roll, because of the smooth curving dimple profiles, there are no perforations or sharp edges which could penetrate the film dielectric, or serve as stress concentration areas.

Included in this discovery is a basic concept in embossed foil patterns for use in dielectric liquid impregnated capacitors of the present invention, and the concept is twofold. First, there is a practical limitation on the peak to valley dimensions of the dimples because an excessive dimension leads to a larger space factor, a condition which makes roll winding quite difficult and contributes to early electrical failure. The maximum peak to valley dimension also limits the number of dimples per unit of foil length. Secondly, the linear dimple peak to dimple peak dimension should be generally equal to the base diameter of the dimple, and in this manner, the number of dimples per unit length of foil is also limited.

The above concept indicates that the pattern on the foil should be correlated to the space factor desired in the capacitor, a high space factor permitting greater dimple height but a lesser number of

dimples, and a lower space factor providing lesser dimple height, but more dimples per unit length. The important feature is that the sinusoidal pattern in both the length and width dimension and full foil involvement should be retained as close as possible.

For the purpose of this invention, the capacitor space factor as set forth in the examples and in the claims is that space factor as measured in a capacitor after full swelling of the polypropylene film by the impregnating fluid. The base measurement for the capacitor space factor is the space factor of the Hazy or other surface toughened polypropylene film. The patterned foil space factor is arbitrarily excluded. The space factor of a polypropylene film having a surface with a roughened texture is the ratio of the theoretical, solid volume of the film strip as compared to its measured volume including a theoretical planar surface lying along the roughened surface. The ratio is given in percent of the solid volume so that a 10% space factor indicates a volume where the space is 10% of the solid material. The film space factor is then increased by an amount representing the swelling of the film by the impregnating fluid used at appropriate treat temperatures. The increased amount is correlated to a probability curve which accommodates the various tolerances in the manufacturing processes and materials, and a final design or capacitor space factor is determined which is larger than the measured film space factor as above described.

Space factor in the capacitors of this invention is critical to accommodate all the differences in dimensional tolerances of the materials and the different temperature coefficients of expansion of the materials, and the swelling of the materials by the fluids. Space factor is necessary prior to fluid impregnation in order to have space available for the removal of water and other volatile materials when the capacitor is vacuum dried at elevated temperatures, as well as to meet the necessity of having space through which the impregnating fluid passes to essentially completely impregnate the capacitor roll.

Space factor should be uniform throughout the roll, i.e., there should be some minimum degree of space factor such as a mean or average space factor throughout the roll, and this space factor should be preserved and controlled throughout the winding process, and in the flattening process to flatten the capacitor as illustrated in Fig. 1.

The mere provision of rough adjacent film and foil surfaces to provide space for the ingress of fluid is not entirely sufficient for capacitor production. Too little space factor and too much space factor are to be avoided. Space alone can be gained in one respect by a more loose winding of the roll. However, there is a resulting loss of uniformity of the required space factor and a softer roll, both of which, because of the tension winding process and roll flattening process provide critical areas for capacitor failure.

The combination in accordance with preferred embodiments of this invention of patterned foil and Hazy film is a means to more favorably utilize the space factor of the Hazy film, and to adjustably control space factor in the capacitors. The amount of space factor obtainable from presently available Hazy polypropylene films, i.e., from about 3.0% to about 30%, is generally insufficient or otherwise undesirable to serve as the total space factor requirement in, for example, power capacitors, and if available in the film is expected to be somewhat variable in the capacitor manufacturing process because of film swelling. Furthermore, the roughness on polypropylene film may not be entirely uniform and certain areas may have high roughness and others low roughness, a condition not correlated with variances in film and foil thickness and contributes to the problem of attaining a uniform space factor of some satisfactory degree throughout the capacitor roll. The complementary space factor control means is therefore the full dimple pattern foil used in this invention whether or not there is a sufficient amount of space factor already present in the polypropylene film strips. The patterned foil serves as an adjustable cushioning means to provide the desired degree of space factor uniformly throughout the roll. The dimple structure requires an ever increasing force for flattening because of its unperforated dome structure and therefore adjusts itself to varying pressures or forces throughout the roll and in the roll winding process to retain the integrity of the design space factor. It is compressibly deformable and area selective over even a single dome, and more importantly, the total capacitor area of the foil is included in the pattern. This means that each dome supports the film so that the film does not touch the foil between domes to reduce the space factor or block fluid penetration.

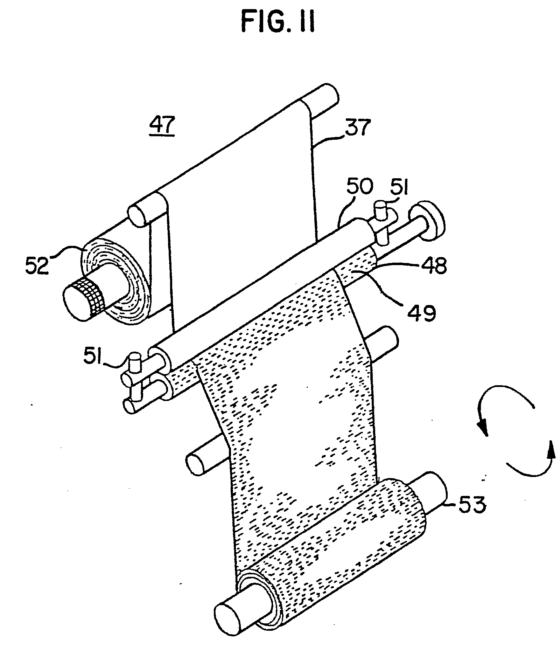

In the preferred practice of this invention the Hazy film and full dimple pattern foil may be wound into a capacitor roll in various arrangements. One preferred arrangement uses only Hazy film as the dielectric material strips 13 through 16 between the foil electrodes 11 and 12. Such an arrangement is shown in Fig. 6 in an exaggerated manner with the film and foil strips in spaced relation.

Referring now to Fig. 6 the composite 33 comprises a pair of patterned or dimpled foils 34 and 35 and two intermediate Hazy film strips 36 and 37. In the commercial production of aluminum foil one surface is usually quite smooth and shiny and the other surface is referred to as a rough or matte surface. The foil rolling operation involves passing two superimposed foil strips between the rolls and the surface between strips becomes different, i.e., rougher than the surface adjacent the rolls. It has been shown that the matte surface actually improves impregnation because of the additional space factor caused by the matte surface. Consequently, as a further aid to impregnation the aluminum foils are positioned such that the smooth or shiny surface is adjacent the rough surface of the Hazy film. This is referred to as a smooth to rough relationship. Hazy film strips may have the required surface

discontinuities or roughness on one or both sides. The Hazy film as described in detail herein has but one surface which is rough. In this latter event when two polypropylene film strips are utilized, they are arranged in what is also referred to as a rough surface to a smooth surface relationship. In this manner each electrode foil strip has a smooth surface which is adjacent a rough surface of a Hazy film strip throughout the roll which facilitates more uniform impregnation of the roll.

A further modification of the embodiment of Fig. 6 is illustrated in Fig. 7. In Fig. 7 the composite 38 comprises a pair of Hazy film strips 36 and 37 which are arranged in rough to rough surface relationship. In this arrangement one or both rough surfaces of the electrode foil strips may be adjacent a smooth film strip surface although it is preferred to have one reversed from the other. The impregnating fluid is caused to permeate the rough surface areas between the film strips and then to proceed laterally through the film strips into the areas between the film strips and the foil strips. Fluid also permeates this area from the roll ends along the electrode foil surfaces.

An additional modification is illustrated in Fig. 8. Referring to Fig. 8 the composite 39 comprises a pair of dimpled electrode foils 34 and 35 separated by a pair of Hazy film strips 36 and 37 which are arranged in smooth to smooth surface relationship. In this modification the arrangement of the smooth and rough electrode foil strip surfaces is relatively unimportant although it is preferred to have one reversed with respect to the other.

A further modification is illustrated in Fig. 9. Referring now to Fig. 9, the composite 40 comprises a pair of dimpled foils 34 and 35 separated by three Hazy film strips 36, 37 and 41. The film strips are all arranged in smooth to rough relationship as a preferred embodiment although there could be a mix of relationships. The electrode foil strips are arranged with a smooth foil surface adjacent a rough surface of a film strip. The use of three film strips of Fig. 9 instead of two film strips of Fig. 6 may provide an additional advantage of a higher dielectric strength capacitor. Obviously more than three film strips may be employed as well as a single film strip.

In some cases, and in any of the described embodiments, it may be desirable to fold over one edge of a foil electrode strip because of increased stress at the foil edge. Electrode foil edges are usually referred to as sharp edged, a condition obtained when the foils are slit to a given width. This slitting is usually accomplished with a knife edge and the resultant electrode foil edge is sharp and sometimes irregular because of burr like projections which become the sites for the commencement of corona. As can be seen in Fig. 6, a high voltage stress field is set up between electrode foil strips 34 and 35 at the roll ends 29 and 30, and any sharp edges or other discontinuities cause or support corona inception. These areas are more susceptible to corona discharge when lower dielectric constant fluids are used, e.g., fluids having a dielectric constant in the range of 2.0 to 3.0 as compared to fluids having a dielectric constant in the range of 2.0 to 3.0 as compared to fluids having a dielectric constant above about 3.0 such as the chlorinated diphenyls and esters, because the fluids are under higher stresses in these areas. Fig. 10 represents an embodiment which minimizes these high stress effects.

Referring now to Fig. 10, the composite 42 comprises a wider electrode strip 43 and a narrower electrode foil strip 44 which are positioned in opposed axial relationship to each other, and the electrode foils are sometimes referred to as an upper electrode foil 43 and a lower electrode foil 44. In such an arrangement the measured distance between the opposed electrode foil edges is increased. However, it is known that a narrower electrode causes a higher voltage stress in the area of the narrower electrode edge. As illustrated in Fig. 10, this narrower electrode foil 44 has a folded edge 45 running throughout the roll. This folded edge 45 presents a smooth rounded surface to the high stress area and reduces the field stress at the rounded surface. In addition the folded edge reduces the fluid film between the rolled edge and adjacent polypropylene film strip, and accordingly reduces the likelihood of breakdown of lower dielectric constant fluid in this area.

When folding an electrode foil at its edges it is important that the foil electrode also be folded at its beginning edge width and its terminating edge width or other means be employed to reduce the stress at those locations. A folded edge between about 0.3175 cm (0.125 inch) and 1.27 cm (0.5 inch) will provide satisfactory results, and a range between 0.635 cm (0.25 inch) and 0.95 cm (0.375 inch) is preferred. An additional degree of space factor may be used to accommodate the folded edge. Best results are attained in this invention, with or without a folded electrode foil, when the final space factor is equal to or greater than an amount which will permit total and unrestricted swelling of the polypropylene film by the fluid in the capacitor. In the usual case polypropylene films as described will swell in capacitors such as those in the following example, in the range of about 10 to 18% by volume when using the noted fluids. It is important that ingress and egress of a fluid in a capacitor, or in the polypropylene film, or in the intervening spaces not be restricted by a limitation of film swelling.

Many ester and hydrocarbon capacitor fluids may be effectively employed in this invention. Included are synthetic fluids such as the alkanes and biphenyls. The dielectric constant of these fluids may vary from about 2.5 to greater than about 5. The stress on the dielectric system is shared in proportion to the dielectric constants of the materials. Higher dielectric constant fluids shift more stress to the film. With a dielectric constant of polypropylene film of about 2.5, the lower dielectric constant fluids will be more highly stressed, and corona conditions at the roll edges may be worsened.

Included among these fluids are alkyl benzene, alkyl naphthalene, alkyl biphenyl, alkyl polyphenyl, alkylaryl ethers and alkyl substituted derivatives thereof, diaryl alkanes and alkyl substituted derivatives

thereof, and diaryl ethers and alkyl substituted derivatives thereof, wherein said alkyl groups and alkanes have from 1 to about 20 carbon atoms, said aryl radicals are phenyl, napthyl, biphenyl, or polyphenyl, and said polyphenyls include from 3 to about 5 phenyl groups. One preferred fluid employed in this invention is diaryl alkane (phenyl zylyl ethane) commercially available as Nisseki Condenser oil S (PXE) from Nippon Oil Company, Japan.

Another preferred fluid is monoisopropyl biphenyl (MIPB) which is a carefully blended mixture of the meta and para substituted biphenyl derivatives. MIPB is represented by

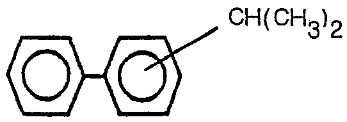

having formula $C_{15}H_{16}$ and a molecular weight of 196.3.

Other and higher dielectric constant fluids include the chlorobenzenes, chlorodiphenyl oxides, and the mixtures of esters and chlorinated aromatic compounds.

Impregnation of the capacitors of this invention may follow the usual practices associated with polypropylene film capacitors, for example, as disclosed and claimed in U.S. Patent 3,363,156. It is preferred however, to utilize a lower temperature drying and evacuation process in the range of about 30—110°C, preferably 90—110°C and less than about 60 microns of Hg pressure, and a filling process where the capacitor is at 30—80°C, and the fluid is at 30—50°C. Subsequently, the capacitors may be placed in an oven and their temperatures elevated into a range between about 40°C and 100°C, and preferably between about 60 to 90°C for as much as 40 hours.

The following examples are typical of the excellent results obtainable following the teachings of this invention. The capacitor space factor used were in the range of from about 5% to about 8%. Hazy film roughness varied from about 10% to 30% space factor of the polypropylene film only. The fluids used were PXE (Fluid A) which was purchased from Nippon Chemical Company as Nisseki Condenser Oil S and contained about 97% phenyl xylyl ethane with the balance a mixture of isomers, and MIPB (Fluid B) which was purchased from Tanatex Company as Sure-Sol 250. In each case the fluid was carefully refined to high purity and about 0.6—0.8% by weight of an epoxide such as ERL 4221 (commercially available from Union Carbide Company U.S.) and from about 0.01% to 0.10% by weight of an antioxidant material such as 2,6-di-t-butyl-p-cresol were added thereto.

Example I

A number of capacitors were assembled in accordance with the structure of Figs. 3, 5 and 6 following the preferred practices set forth. The capacitor rolls were 26.97 cm (10.62 inches) in length and comprised patterned aluminum foil electrodes of about 5.6 $\mu$m (0.22 mil) thickness with 100 dimples 50/50 per 2.54 cm (1 in) and two sheets of Hazy polypropylene film having about 10% to 30% space factor, one strip having a thickness of 18 $\mu$m (0.70 mil) and the other either 25.4 $\mu$m (1.0 mil) or 17 $\mu$m (0.65 mil). Each capacitor was on the order of about 26 inches (66.0 cm) in height.

The assembled capacitors were oven dried at a temperature in the range of 85°C to 100°C and a vacuum of less than 60 microns Hg. for about 26 hours. The capacitors were then allowed to cool to the range from about 50° to 80°C, and the impregnating fluid at a temperature of about 40° to 50°C was introduced into the capacitor under vacuum. After filling, the capacitors are placed in an oven and the temperature raised to from about 65°C to 85°C. After stabilization at temperature, the capacitors were left to soak in the oven for about 20 hours after which temperature is reduced to room temperature. This soaking was repeated a second time for an additional 20 hours. Thereafter the capacitors were brought to room temperature, sealed and given certain electrical tests.

DIV is discharge inception voltage also known as corona start voltage, and the values given are the averages of three readings. DEV is discharge extinction voltage, also known as corona extinction voltage. Dissipation factor is %DF or tan $\delta$ (loss angle) and is given as a watts loss percentage. The results show repetitive excellent capacitors as follows; albeit that the design and test criteria of these capacitors are inordinately severe.

| Diel. Thickness μ | Diel. Volts | Test Volts | μf Roll | DIV Av | DEV Av | DIV 250 Hrs | DEV 250 Hrs | DIV 1000 Hrs | DEV 1000 Hrs | T°C |
|---|---|---|---|---|---|---|---|---|---|---|
| 35.0 | 1680 | | 7μf | 3100 | 2600 | | | | | 25 |
| 35.0 | 1680 | | 7μf | 3200 | 2500 | | | | | 25 |
| 35.0 | 1680 | | 7μf | 3300 | 2600 | | | | | 25 |
| 35.0 | 1680 | | 7μf | 3100 | 2500 | | | | | 25 |
| 43.0 | 1990 | | 4μf | 3700 | 3000 | | | | | 25 |
| | | | | 3200 | 2700 | | | | | 80 |
| 43.0 | 1990 | | 4μf | 3000 | 2400 | | | | | 25 |
| | | | | 3400 | 3100 | | | | | 80 |
| 43.0 | 1990 | | 4μf | 3900 | 3000 | 3700 | 3300 | | | 25 |
| | | | | 4250 | 2200 | 3400 | 2700 | | | 80 |
| 43.0 | 1990 | | 4μf | 3900 | 3200 | 3800 | 3500 | | | 25 |
| | | | | 5200 | 4300 | 3300 | 3000 | | | 80 |
| | 1990 | | 4μf | 3600 | | 3000 | | 3200 | 3100 | 25 |
| | | | | 3600 | | 3100 | | 3000 | 2700 | 25 |
| | | | | 3700 | | 3100 | | 3600 | 3400 | 25 |
| | | | | 3500 | | 3000 | | 3800 | 3400 | 25 |

As can be seen from the above data, these capacitors were subject to severe voltage stress and show very high and stable and repetitive DIV and DEV values. When the noted units were placed on rated voltage for life testing, a first retest occurred at 250 hours, indicating that no units had failed and no significant changes had occurred. Life testing was then continued for a total of 1000 hours, and a retesting occurred on representative units from each example. The DIV and DEV values remained satisfactory with an overall improvement. Dissipation factor and capacitance tests showed excellent values with dissipation factor improving with time, i.e., 120% of rated voltage for 1000 hours and being about 0.01% at 85°C.

## Example II

A further group of seven capacitors were made in accordance with the foregoing Example I, using a roll width of 57.15 cm (22.5 inches). The dielectric thickness was one sheet of 18 μm (0.7 mil) and one sheet of 25.4 μm (1.0 mil). These capacitors were rated 52 μf and 75 KVAR, with 1990 volts on the dielectric system across the foils. These capacitors were put on a life test at voltages ranging from 2350 to 3600 volts and temperatures ranging from room temperature to 70°C. All capacitors so tested survived in excess of 500 hours at the higher than rated voltages thus showing the improved capabilities of the dielectric system.

## Example III

Further groups of capacitors of various voltage ratings were made up in accordance with Example I and tested. Item #6 was a wide roll 57.15 cm (22.5 inches). The others were 28.75 cm (11.25 inches). The pad voltage, i.e., the voltage across the electrode foils ranged from 1800 to 1990 volts. The dielectric thickness between the electrode foils ranged from 38 μm (1.5 mil) thickness 43 μ (1.7 mil) thickness. The overall space factor for the total capacitor roll design was in the range of 20% to 30% before impregnation. The results show repetitiveness and certainty of the capacitors made in accordance with the present invention.

| # Units | KVAR | Volts (Rated) | DF 85°C | Overvoltage 60 hrs 120% Rated V | | |
|---|---|---|---|---|---|---|
| | | | | Tested | Survived | Failed |
| 36 | 200 | 9960 | 021 | 36 | 36 | 0 |
| 48 | 200 | 14400 | 018 | 9 | 9 | 0 |
| 30 | 200 | 7620 | 021 | 9 | 9 | 0 |
| 30 | 200 | 7620 | 025 | 7 | 7 | 0 |
| 27 | 200 | 12470 | 015 | — | — | — |

## Example IV

Several capacitors were made up along the lines of those in Example I. The capacitors had rolls of 28.75 cm (11.25 inches) in length and 4 $\mu f$ capacity. The capacitors were rated at 1990 volts across the foils. As per FIG. 8 one inside foil had each edge folded over for 0.95 cm (0.375 inch). Electrical tests on these capacitors indicate a marked increase in DIV and DEV values as compared to unfolded designs.

## Example V

In this example, special test capacitor units were made up of 38.1 cm (15 inch) rolls with patterned foil having 120/120 dimples per inch as described with respect to Fig. 11. Capacitor space factor was between 5% and 10%. The rolls were designed fro 1670 volts. One sheet of 16.5 $\mu$m (0.65 mil) film with 5% to 10% space factor and one sheet of 17.7 $\mu$m (0.7 mil) film with 5% to 10% space factor were used in the dielectric system as illustrated in Figs. 3, 5 and 6. Impregnation followed the practices of Example I.

The above capacitor units were given corona start voltage tests ranging from —40°C to 25°C and exceed 180% of rated voltage. Tests were made for corona extinction voltage which was found to be about 160% of rated voltage, both values being excellent for all film capacitors.

The use of the full dimple patterned foil of this invention and Hazy film facilitates, lends assurance to the impregnation of an all film capacitor and represents an improvement in the impregnation process. The use, in combination of Hazy film and patterned foil lends the requisite assurance and repetitiveness of the results and each supports and complements the other in areas where the other may be deficient. By this means the desirably high values of DEV, for example, are sustained.

The combination moderates the impregnation parameters which have become so severe for all film capacitors, and provides a structure widely adaptable to various impregnation processes including those of the manifold fill and flood fill kinds. Polypropylene film, as well as other synthetic resin films, may be easily produced with some degree of surface roughness less than or exceeding the preferred Hazy film of this invention, for example, less than about 5.0%. The pattern foil of this invention will provide its unique spacer results over the total range of surface roughness of the synthetic resin film from about 3.0% to greater than 30.0%. The space factors of the dimpled foil may be correlated with the space factors of the film in a higher to lower relationship or lower to higher, as the case may be. The preferred ranges are from about 5.0% to 30.0% more preferably 10% to 30% space factor for the film, and a foil thickness of about 2 to about 5 times the original thickness. Examination of the full dimple pattern foil removed from assembled capacitors shows areas of minimum and few areas of maximum thickness indicating that the foil conforms to the available space and pressures where the spaces are due to haze variations, mismatched tolerances, or uneven winding. Such examinations also indicate that the smaller dimples, with a greater number per inch are quite resistant to erasure and persevere to a high degree during the manufacturing process. Examination has also shown that excessive erasure indicates more dimple height than necessary. Consequently, dimple densities above about 100/100 are preferred. Most of the capacitors in the foregoing examples were high voltage power factor correction capacitors. Such capacitors may be rated above about 600 Volts AC to above about 13,800 volts AC, and their dielectric systems are under a high voltage stress. These capacitors are rated in KVAR (kilovolt ampere reactance) from about 50 KVAR to 400 KVAR and above. It is in these capacitors that the present invention is most applicable and desirable.

While it is eminently desirable to use Hazy film in this invention because of the assuredness it lends to the space factor it provides, a satisfactory all film capacitor can be produced solely with the full dimple pattern foil of this invention, particularly the narrow width roll capacitors. However, there are instances where it would appear that either the patterned foil of this invention or the Hazy film will provide improved results. Their use together sometimes masks the contribution of one over the other, which, as before mentioned might be attributable to their complementary functions. The following Examples provide some indication of the individual contributions of patterned foil and Hazy film.

Example VI

In this example the capacitor construction and treatment were similar to those of Example I except that the capacitor rolls were of narrow design 26.9 cm (10.62 inches) wide and relatively smooth film, e.g., low space factor (LS) are included. High space factor Hazy film (HS) had an average space factor of about 20%. Capacitor space factor was about 5%. The voltage rating of the dielectric was moderate, i.e., about 1200 volts. DC is Direct Current, AC is Alternating Current, Vr is rated voltage. The capacitors were rated at 7960 volts and 200 KVAR.

| Film | DC 6.5 x Vr | AC 3 x Vr | 250 Hrs 6.25 x Vr | DC 6.25 Vr |
|---|---|---|---|---|
| LS | 1/6 | 0/3 | 0/3 | 1/3 |
| HS | 3/6 | 0/3 | 0/3 | 0/3 |

Example VII

In this example, duplicate sets of all polypropylene film capacitors were made up where only difference was one group included patterned foil and the other did not. Test results are as follows indicating that pattern foil provides superior results.

| Capacitor | Test Volts | T°C | No. Tested | No. Failed | Time Hrs. |
|---|---|---|---|---|---|
| Plain foil | 660 AC | 80 | 18 | 4 | 1700 |
| Patterned Foil | 660 AC | 80 | 20 | 0 | 1700 |

One of the major reasons for the wide range of applicability of the full dimple pattern foil is the smoothness and cushioning effect of the dimple structure. Other projections or depressions formed by crimping, punching, knurling, or by sand blasted rolls cause sharp edge projections in the foil and many tears and punctures, all of which are highly disadvantageous in a high voltage highly stressed all film capacitor becaus of corona as described. The dimple or mound shape of the depressions and projections of the full dimple patterned foil of this invention utilize smooth flowing surfaces defining geometric ovate shapes which are extremely resistant to total deformation or crushing. These dimples desirably project equidistantly from both sides of the plane of the foil and form a geometric or regular and repeating pattern of equidistantly spaced dimples and rows as illustrated. The pattern is continuous and coterminous with the active foil surface in a capacitor. The use of the dimple pattern provides an added safety factor to the capacitors of this invention and a more reliant capacitor with respect to many minor abnormalities which may occur in capacitor operation. DC dielectric tests indicate an increased dielectric strength.

Preferably the dimpling process is carried out on the winding machine used to wind the capacitor rolls. The major advantage of this procedure is that it obviates the necessity of rewinding the patterned foil on a roll for subsequent winding into a capacitor roll. Such winding and rewinding exposes the dimples to potential damage, principally by crushing. The practice of using foil tension to drive the embossing rolls lends consistency and uniformity to the dimples and the pattern.

The improved foil of this invention comprises a combination of deforming the full area of the foil and polishing or physically working the foil in selected areas which are coterminous over the foil surface. This improved foil may be produced in two more important processes which may be described with reference to Figs. 11 and 12. In both instances an aluminum foil, U.S. Grade 1143 is used. This is a commercial designation of a soft annealed foil of 90,43+% purity.

Referring now to Fig. 11, a capacitor roll winding machine 46 has suitably mounted thereon an embossing apparatus 47. In apparatus 47, a roll 48 is a steel roll having on its surface 49 a protruding dimple pattern containing the desired number of dimples per 2.54 cm (inch) preferably above about 100. Each dimple structure is of the same general structure as described with respect to the dimples of Figs. 4 and 5 and all dimple heights are preferably the same. A second roll 50 is mounted on machine 46 in parallel relationship with roll 48. The outer surface of roll 50 is a hard but resilient material. This material may be a plastic or rubber like material and excellent results have been obtained with a hard rubber of about 60—80 durometer hardness. Roll 50 is biased against embossing roll 48 by means of suitable biasing or spring means 51.

The aluminum foil 37 is pulled from a supply roll 52, and from between rolls 48 and 50 by the driver or capacitor winding roll 53. Other supply rolls deliver the other foil electrode and polypropylene dielectric strips to the capacitor roll 53. The depth of penetration of the protruding dimple of the embossing roller 49 into the rubber material of roll 50 falls in the range of from about 5.0 μm (0.2 mil)

to about 25.4 $\mu$m (1.0 mil). Consequently when starting with an aluminum foil thickness of from about 5.0 to 6.0 $\mu$m thickness, the final thickness of the embossed foil 37 is in the range of from about 2—5 times the original thickness of the aluminum foil.

Space factors for all film capacitors of this invention (unimpregnated) where part of the space factor is taken up by textured or hazy surfaced polypropylene film indicates that the dimple pattern of this invention desirably should fall in the range of from about 100/100 dimples per 2.54 cm (inch) of foil length to about 500/500 dimples per 2.54 cm (inch) of foil length.

The embossed pattern which is impressed in the foil by this process is, in cross section, a sinusoidal pattern as illustrated in Fig. 5 in that the individual dimples are close to each other, press into the resilient roll surface to provide a rounded dimple tip, and the resilient material of the roll 50 is pressed up slightly into the area between adjacent dimples. In this connection the full depth of the dimples on roll 48 into the embossing roller 50 is not attained in this embossing process. The dimple height on roll 48 may be on the order of 50.0 $\mu$m or more yet the penetration into roll 50 is limited to a fraction thereof. Consequently the embossing process alters the original plane of the foil and a dimple projection is also generated on the side of the foil opposite the raised dimple pattern surface. Consequently, in cross section an unassumed plane passes through the center of the dimples and the Fig. 5 cross section illustration or sinusoidal pattern is obtained. Again the full foil surface is involved in the embossing dimple pattern because the dimples are fully formed and the original plane of the foil has been altered.

With more than 14,000 dimples per 6,4516 cm² (square inch) the foil surface and the outer surfaces of the dimple tips are being worked, polished and smoothed, and slight apertures or tear edges and other irregularities of the foil are also smoothed, for more effective foil operation electrically. Such a foil is termed a preconditioned foil because of the working and polishing of essentially the total foil surface, and in particular, the working and hardening of the dimple tips which press into the polypropylene film dielectric.

Tests indicate that a dimple concentration of 120/120 dimples per inch foil, together with the Fig. 11 process is superior to lesser dimple concentration and the Fig. 12 process in many respects and is thus preferred. There is less leveling of the dimples, and easier roll winding, yet the resilient spacer concept is preserved. A preferred range of dimples starts above about 100/100 with an upper limit being the upper practical limitations of foil working, preserving distinct patterns maintaining a desirable depth of the pattern. Ordinarily this upper limit is about 500/500 dimples per inch. With increasing numbers of dimples, the overall thickness of the finished foil may be somewhat less than two times the original thickness. However, by changing roll winding techniques and tension, the resilient spacer concept is preserved.

The process and apparatus illustrated in Fig. 12 may also be used to provide the foil of this invention.

Referring now to Fig. 12, the dotted outlines is that of a capacitor roll winding machine 46 with a foil pattern apparatus 54 suitably attached. Apparatus 54 comprises a pair of embossing rolls 55 and 56 which are mounted for rotation on machine 46. Each roll surface is made of steel and is precision etched or engraved to provide mound-like projections thereon. In the alternative, either or both rolls may be of non metallic materials such as hardened plastics or rubbers. The roll surfaces, precisely assembled with appropriate adjustment devices, are brought into mating engagement with each other so that the projections of one roll interfit between projections on the mating roll. External gearing couples the rolls to each other to maintain alignment. In cross section the roll projections defined mound like projections slightly in mesh with the same projections on the opposite roll. The rolls may be adjustable to vary their spaced apart distance to provide a dimple structure in the foil of about 63.5 $\mu$m (0.00025 inches) from the top of a dimple to the plane of the foil. In the adjustment of the rolls 55 and 56 there is a clearance which is significantly greater than the foil thickness so that only a part of a dimple on the roll protrudes into the foil.

The Fig. 12 apparatus does not provide the kind of preconditioning obtained from the Fig. 11 process because the dimple tips are not engaged on the outer surface by an opposing surface by an opposing surface which would work, smooth, and polish the metal.

## Claims

1. An electrical capacitor grade aluminum foil electrode comprising a soft annealed aluminum foil strip (11) having a plurality of individual curvilinear surfaced dimple-like projections (32) and depressions (31) from the plane of the foil strip, said projections and depressions being coterminous with the length and breadth of the useful foil surface in an electrical capacitor (19), and being formed and spaced apart in a manner whereby there is a smooth essentially continuously curving foil surface leading from one depression to an adjacent projection so that a point on the base of one depression and a point on the adjacent base of a projection are essentially coincident.

2. Aluminum foil electrode according to Claim 1, the projections and depressions of which are in the range of 3.17 $\mu$m (0.00125 in) to 9.5 $\mu$m (0.0037 in) in height and have bases in the range of 2.54 $\mu$m (0.01 in) to 5.08 $\mu$m (0.02 in) in diameter.

3. Embossing rolls for the manufacture of a foil electrode according to Claim 1 or 2, characterised by a pair of embossing rolls (55, 56) with dimple-like projections on their surfaces between which the aluminum foil electrode strip may be drawn, the rolls being mounted so that they are freely rotatable and adjustable towards each other, and adjusted so that the projections on one roll interfit with the projections on the other roll, the aluminum foil (37) being positioned between and engaging said rolls.

4. Embossing rolls for the manufacture of a foil electrode according to Claim 1 or 2, characterised by a pair of rolls (48, 50) between which the foil electrode strip may be drawn, one of which rolls is a steel roll (48) having on its surface (49) a protruding dimple-like pattern, the other roll (50) being mounted in parallel relationship with the steel roll (48) the other surface consisting of a resilient material, and biased against the steel roll, the foil electrode being pulled between the said rolls.

5. An electrical capacitor including a casing with electrical terminals thereon and at least one capacitor roll in said casing and connected to the terminals, and a dielectric fluid in the casing and impregnating the roll, the roll comprising a pair of spaced metallic electrode foil strips and a dielectric therebetween consisting solely of a synthetic resin material and comprising at least one synthetic resin strip, and said dielectric fluid being selected from the class consisting of esters and hydrocarbons, characterised in that said electrode foil strips have a full pattern of continuous uniform dimple-like structures coterminously on the surface thereof, said dimple-like structures providing a foil thickness which, before winding in said roll, is from 2 to 10 times the original foil thickness, and in that said synthetic resin strip comprises polypropylene having at least one surface of a roughened texture to provide a film space factor above about 3.0%.

6. An electrical capacitor according to Claim 5, characterised in that the number of said dimple-like structures is above 100 per 2.54 cm of foil length and the height of said dimple-like structures is substantially equal to their base diameter.

7. An electrical capacitor according to Claim 6, characterised in that the number of said dimple-like structures is between 100 and 500 per 2.54 cm of foil length.

8. An electrical capacitor according to any one of Claims 5—7, characterised in that said electrode foils strips are as defined in Claim 1 or Claim 2.

9. An electrical capacitor according to any one of Claims 5—8, characterised in that said original thickness of said foil is 6 $\mu$m (0.25 mil) and in that said dimple-like structures provide a foil thickness which is from 2 to 5 times said original thickness.

10. An electrical capacitor according to any one of Claims 5—9, characterised in that said dielectric comprises a pair of polypropylene film strips, each of which has one roughened surface and one smooth surface and arranged so that one rough surface is adjacent a smooth surface.

11. An electrical capacitor according to Claim 10, characterised in that the roughness of the polypropylene film strips provides a film space factor of between 10% and 30%.

12. An electrical capacitor according to any one of Claims 5—11, characterised in that the dielectric fluid comprises phenyl xylyl ethane.

13. An electrical capacitor according to any one of Claims 5—11, characterised in that the dielectric fluid comprises an isopropyl biphenyl.

14. An electrical capacitor according to any one of Claims 5—13, characterised in that the space factor of the assembled and impregnated capacitor is between 5% and 10%.

15. An electrical capacitor according to any one of Claims 5—14, characterised in that the capacitor is a power factor correction capacitor rated between 50 and 400 KVAR.

**Revendications**

1. Electrode en feuille d'aluminium de qualité pour condensateur électrique comprenant une bande de feuille d'aluminium recuit doux (11) comportant un ensemble de saillies (32) et de creux (31) en forme d'ondulations à surface curviligne, par rapport au plan de la bande de feuille, ces saillies et ces creux occupant toute la longueur et toute la largeur de la surface utile de la feuille dans un condensateur électrique (19) et étant formés et espacés de manière à avoir une surface de feuille lisse de courbure essentiellement continue d'un creux à une saillie adjacente de façon à ce qu'un point sur la base d'un creux coïncide pratiquement avec un point sur la base adjacent d'une saillie.

2. Electrode en feuille d'aluminium selon la revendication 1, dont les saillies et les creux présentent une hauteur comprise entre 3,17 $\mu$m (0,00125 inch) et 9,5 $\mu$m (0,0037 inch) et un diamètre de leur base compris entre 2,54 $\mu$m (0,01 inch) et 5,08 $\mu$m (0,02 inch).

3. Rouleaux de bosselage pour la fabrication d'une électrode en feuille selon la revendication 1 ou 2, caractérisés en ce qu'ils sont constitués par une paire de rouleaux de bosselage (55, 56) comportant sur leur surface des saillies en forme d'ondulations entre lesquels peur être tirée la bande d'électrode en feuille d'aluminium, les rouleaux étant montées de manière à pouvoir tourner librement, réglables l'un vers l'autre et réglés de façon à ce que les saillies de l'un des rouleaux s'encastrent entre les saillies de l'autre rouleau, la feuille d'aluminium (37) étant placée entre les rouleaux et en prise avec ceux-ci.

4. Rouleaux de bosselage pour la fabrication d'une électrode en feuille selon la revendication 1 ou 2, caractérisés en ce qu'ils sont constitués par une paire de rouleaux (48, 50) entre lesquels peut être tirée la bande d'électrode en feuille, l'un des rouleaux étant un rouleau d'acier (48) comportant sur sa

surface (49) un modèle ondulé en relief, l'autre rouleau (50) étant monté parallèlement au rouleau d'acier (48), l'autre surface étant constituée par un matériau élastique et poussée contre le rouleau d'acier, l'électrode en feuille étant tirée entre ces rouleaux.

5. Condensateur électrique comprenant un boitier portant des bornes électriques et au moins un enroulement de condensateur à l'intérieur du boitier et relié aux bornes, et un fluide diélectrique à l'intérieur du boitier imprégnant l'enroulement, l'enroulement comprenant une pair de bandes de feuille d'électrode métallique séparées l'une de l'autre par un diélectrique uniquement constitué par un matériau du type résine synthétique et comprenant au moins une bande de résine synthétique, le fluide diélectrique étant choisi dans le groupe constitué par des esters et des hydrocarbures, caractérisé en ce que les bandes de feuille d'électrode sont entièrement modelées en structures ondulées continues et régulières occupant toute sa surface, ces structures ondulées conférant à la feuille une épaisseur qui, avant son enroulement est de 2 à 10 fois l'épaisseur d'origine de la feuille, et en ce que la bande de résine synthétique est constituée par du polypropylène présentant au moins une surface de texture rendue rugueuse pour conférer au film un coefficient d'encombrement supérieur à environ 3,0%.

6. Condensateur électrique selon la revendication 5, caractérisé en ce que le nombre de structures ondulées est supérieur á 100 pour 2,54 cm de longueur de feuille et la hauteur des structures ondulées est à peu près égale au diamètre de leur base.

7. Condensateur électrique selon la revendication 6, caractérisé en ce que le nombre de structure ondulées est compris entre 100 et 500 pour 2,54 cm de longueur de feuille.

8. Condensateur électrique selon l'une quelconque des revendications 5 à 7, caractérisé en ce que les bandes de feuille d'electrode sont telles que définies dans la revendication 1 ou dans la revendication 2.

9. Condensateur électrique selon l'une quelconque des revendications 5 à 8, caractérisé en ce que l'épaisseur d'origine de la feuille est de 6 $\mu$m (0,25 mil) et en ce que les structures ondulées confèrent à la feuille une épaisseur de 2 à 5 fois l'épaisseur d'origine.

10. Condensateur électrique selon l'une quelconque des revendications 5 à 9, caractérisé en ce que le diélectrique est constitué par une paire de bandes de film de polypropylène ayant chacune une surface rendue rugueuse et une surface lisse, placées de manière à ce qu'une surface rugueuse soit adjacente à une surface lisse.

11. Condensateur électrique selon la revendication 10, caractérisé en ce que la rugosité des bandes de film de polypropylène confère au film un coefficient d'encombrement comprise entre 10% et 30%.

12. Condensateur électrique selon l'une quelconque des revendications 5 à 11, caractérisé en ce que le fluide diélectrique est constitué par du phénylxylyléthane.

13. Condensateur électrique selon l'une quelconque des revendications 5 à 11, caractérisé en ce que le fluide diélectrique est constitué par un isopropylbiphényle.

14. Condensateur électrique selon l'une quelconque des revendications 5 à 13, caractérisé en ce que le coefficient d'encombrement du condensateur monté et imprégné est compris entre 5% et 10%.

15. Condensateur électrique selon l'une quelconque des revendications 5 à 14, caractérisé en ce que le condensateur est un condensateur pour la correction du facteur de puissance auquel on a conféré une puissance nominale comprise entre 50 et 400 kVAR.

**Patentansprüche**

1. Aluminiumfolienelektrode mit einer für elektrische Kondensatoren geeigneten Qualität aus einem weichen vergüteten Aluminiumfolienstreifen (11) mit einer Vielzahl von einzelnen, sich aus der Ebene des Folienstreifens heraus erstreckenden krummlinig oberflächlich muldenartigen Vorsprüngen (32) und Vertiefungen (31), wobei sich diese Vorsprünge und Vertiefungen über die ganze Länge und die ganze Breite der nutzbaren Folienoberfläche in einem elektrischen Kondensator (19) erstrecken und auf eine solche Weise ausgeformt und voneinander beabstandet sind, daß eine weiche, im wesentlichen gleichmäßig gekrümmte Folienoberfläche von einer Verteifung zu einem benachbarten Vorsprung führt, so daß ein Punkt auf dem Grund einer Vertiefung und ein Punkt auf dem benachbarten Grund eines Vorsprunges im wesentlichen an der gleichen Stelle liegen.

2. Aluminiumfolienelektrode nach Anspruch 1, deren Vorsprünge und Vertiefungen eine Höhe im Bereich von 3,17 $\mu$m bis 9,5 $\mu$m havbe und deren Grundfläche einen Durchmesser im Bereich von 2,54 $\mu$m bis 5,08 $\mu$m aufweisen.

3. Prägewalzen für die Herstellung einer Folienelektrode nach Anspruch 1 oder Anspruch 2, gekennzeichnet durch ein Paar Prägewalzen (55, 56) mit muldenartigen Vorsprüngen auf ihren Oberflächen, zwischen denen der Aluminiumfolienelektrodenstreifen hindurchgezogen wird, wobei die Walzen so angeordnet sind, daß sie frei drehbar und zueinander einstellbar sind und dabei so engestellt sind, daß die Vorsprünge auf einer Walze zwischen die Vorsprünge auf der anderen Walze passen oder greifen und die Aluminiumfolie (37) zwischen die Walzen positioniert wird und mit diesen zum Eingriff kommt.

4. Prägewalzen für die Herstellung einer Folienelektrode nach Anspruch 1 oder Anspruch 2, gekennzeichnet durch ein Paar Walzen (48, 50) zwischen denen der Folienelektrodenstreifen hindurchgezogen werden kann, wobei eine der Walzen eine Stahlwalze (48) mit auf ihrer Oberfläche (49) vorstehenden muldenartigen Mustern ist, die andere Walze (50) parallel zu der Stahlwalze (48) angeordnet ist und ihre Oberfläche aus einem elastischen Material besteht und gegen die Stahlwalze gepreßt ist und die Folienelektrode zwischen den Walzen hindurchgezogen wird.

5. Elektrischer Kondensator mit einem Gehäuse, auf dem sich elektrische Anschlüsse befinden, und wenigstens einer Kondensatorwicklung in dem Gehäuse, die mit dem Anschlüssen verbunden ist und einem dielektrischen Fluid in dem Gehäuse, das die Wicklung imprägniert, wobei die Wicklung ein Paar metallischer mit Abstand voneinander angeordneter Elektrodenfolienstreifen und ein Dielektrikum dazwischen aufweist, das nur aus einem Kunstharz-Material besteht und mindestens einen Kunstharzstreifen umfaßt und das dielektrische Fluid aus der aus Estern und Kohlenwasserstoffen bestehenden Klasse ausgewählt ist, dadurch gekennzeichnet, daß die Elektrodenfolienstreifen ein durchgehendes Muster von fortlaufend gleichmäßigen muldenartigen Strukturen bis an die Grenzen auf ihrer Oberfläche aufweisen, die muldenartigen Strukturen vor dem Aufwickeln zur Wicklung eine Foliendicke ergeben, die das 2- bis 10-fache der ursprünglichen Foliendicke beträgt und weiterhin der Kunstharzstreifen Polypropylen umfaßt, das wenigstens eine Oberfläche mit einer aufgerauhten Textur besitzt, um einen Folien-Füllfaktor von mehr als etwa 3,0% zu liefern.

6. Elektrischer Kondensator nach Anspruch 5, dadurch gekennzeichnet, daß die Anzahl der muldenartigen Strukturen mehr als 100 pro 2,54 cm Folienlänge beträgt und die Höhe der muldenartigen Strukturen im wesentlichen gleich ihrem Basisdurchmesser ist.

7. Elektrischer Kondensator nach Anspruch 6, dadurch gekennzeichnet, daß die Anzahl der muldenartigen Strukturen zwischen 100 und 500 pro 2,54 cm Folienlänge liegt.

8. Elektrischer Kondensator nach einem der Ansprüche 5 bis 7, dadurch gekennzeichnet, daß die Elektrodenfolienstreifen die in den Ansprüchen 1 oder 2 angegebenen Merkmale aufweisen.

9. Elektrischer Kondensator nach einem der Ansprüche 5 bis 8, dadurch gekennzeichnet, daß die ursprüngliche Dicke der Folie 6 $\mu m$ beträgt und daß die muldenartigen Strukturen eine Foliendicke ergeben, die dem 2- bis 5-fachen der ursprünglichen Foliendicke entspricht.

10. Elektrischer Kondensator nach einem der Ansprüche 5 bis 9, dadurch gekennzeichnet, daß das Dielektrikum ein Paar von Polypropylenfolienstriefen aufweist, von denen jeder eine aufgerauhte Oberfläche und eine glatte Oberfläche besitzt, die so angeordnet sind, daß eine aufgerauhte Oberfläche an einer glatten Oberfläche liegt.

11. Elektrischer Kondensator nach Anspruch 10, dadurch gekennzeichnet, daß die Rauhigkeit der Polypropylenfolienstreifen einen Folienwickelfaktor zwischen 10% und 30% ergibt.

12. Elektrischer Kondensator nach einem der Ansprüche 5 bis 11, dadurch gekennzeichnet, daß das dielektrische Fluid Phenyl-Xylyl-Äthan enthält.

13. Elektrischer Kondensator nach einem der Ansprüche 5 bis 11, dadurch gekennzeichnet, daß das dielektrische Fluid ein Isopropyl-Diphenyl enthält.

14. Elektrischer Kondensator nach einem der Ansprüche 5 bis 13, dadurch gekennzeichnet, daß der Füllfaktor des zusammengebauten und imprägnierten Kondensators zwischen 5% und 10% liegt.

15. Elektrischer Kondensator nach einem der Ansprüche 5 bis 14, dadurch gekennzeichnet, daß der Kondensator ein Leistungsfaktor-Korrekturkondensator ist, der auf 50 bis 400 KVAR bemessen ist.

FIG.1.

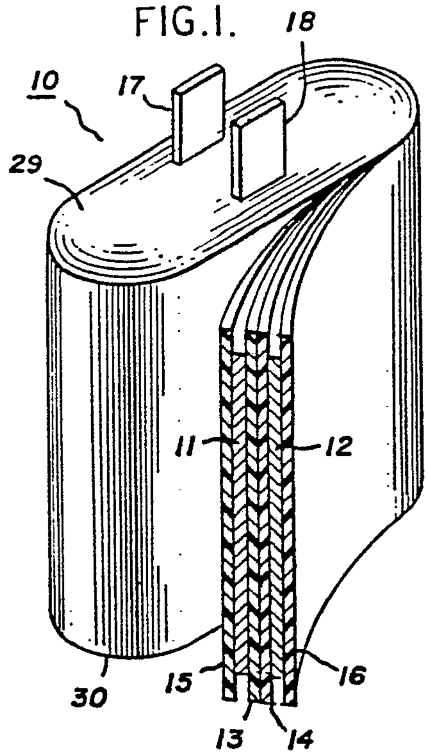


FIG.2.

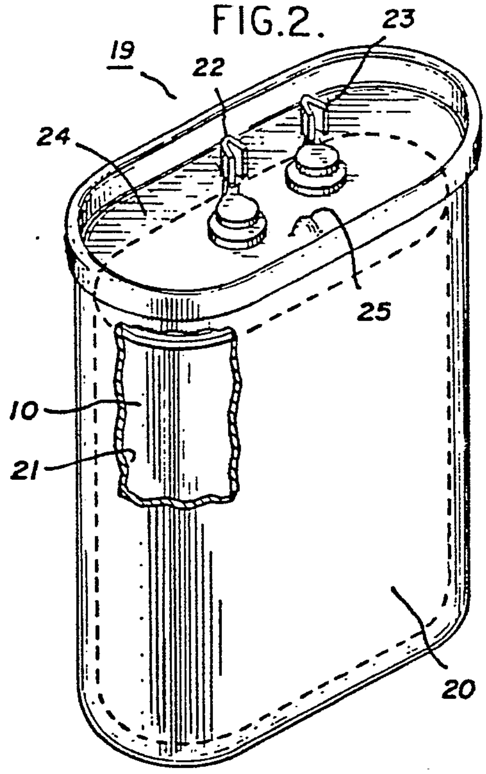


FIG.3.

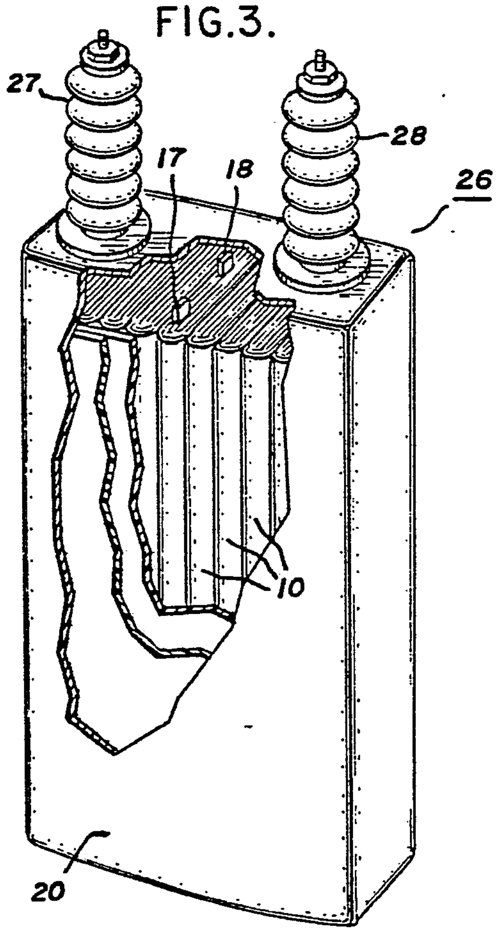


FIG.4.

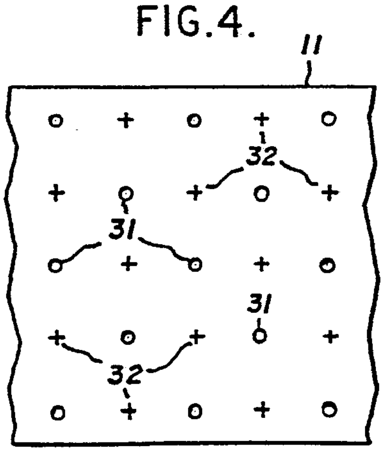


FIG.5.

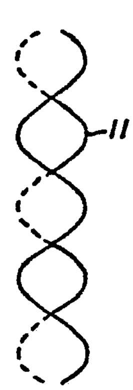

FIG.6.

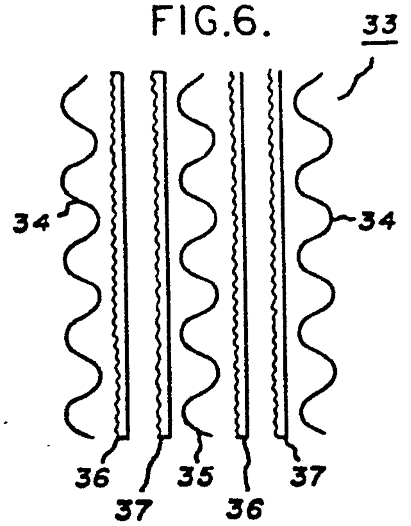


FIG.7.

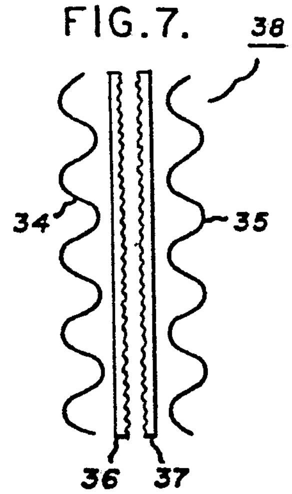


FIG.8.

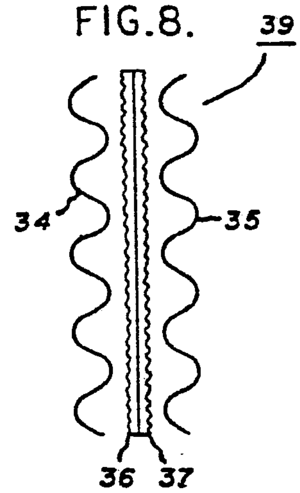


FIG.9.

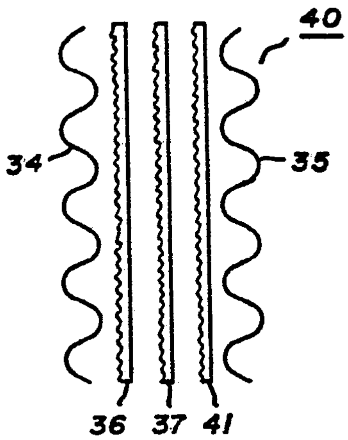


FIG.10.

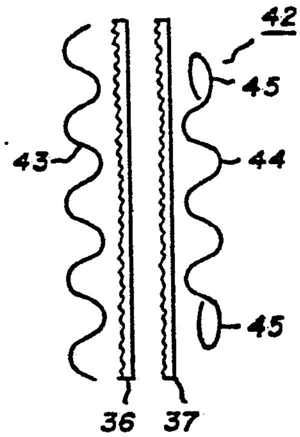


FIG.12

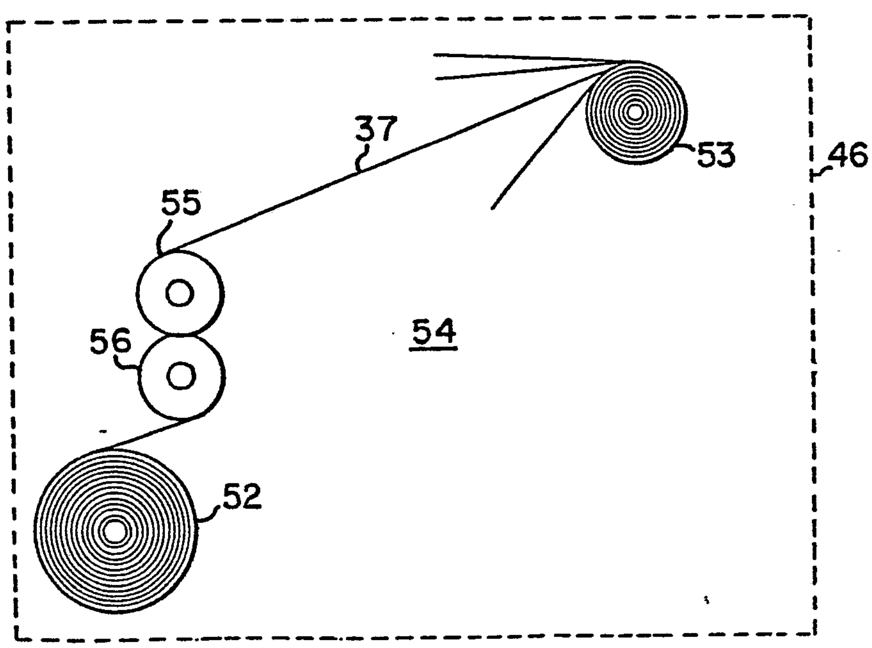

FIG. 11